(19) Europäisches Patentamt
European Patent Office
Office européen des brevets

(11) **EP 3 392 598 B1**

(12) **EUROPÄISCHE PATENTSCHRIFT**

(45) Veröffentlichungstag und Bekanntmachung des Hinweises auf die Patenterteilung:
**11.12.2019 Patentblatt 2019/50**

(51) Int Cl.:
*F41G 1/38* (2006.01)     *G02B 23/14* (2006.01)
*G02B 27/36* (2006.01)     *G02B 27/34* (2006.01)

(21) Anmeldenummer: **18151723.6**

(22) Anmeldetag: **15.01.2018**

(54) **ABSEHEN UND HIERMIT AUSGESTATTETES ZIELFERNROHR, SCHUSSWAFFE HIERMIT UND VERFAHREN ZUR ENTFERNUNGSBESTIMMUNG MIT DEM ABSEHEN**

RETICLE AND TELESCOPIC SIGHT USING THE SAME, FIREARM USING THE SAME, AND METHOD FOR RANGE FINDING USING THE RETICLE

RÉTICULE ET LUNETTE DE VISÉE POURVUE DE LADITE RÉTICULE, ARME À FEU POURVUE DE LADITE LUNETTE ET PROCÉDÉ DE DÉTERMINATION DE DISTANCE FAISANT APPEL À DE LADITE RÉTICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2017 DE 102017100720**

(43) Veröffentlichungstag der Anmeldung:
**24.10.2018 Patentblatt 2018/43**

(73) Patentinhaber: **SCHMIDT & BENDER GmbH & Co. KG**
**35444 Biebertal (DE)**

(72) Erfinder:
• **Höller, Jonas Joachim**
**35423 Lich (DE)**
• **Holzmann, Michael**
**35279 Neustadt (DE)**
• **Hennemann, Jörg**
**35444 Biebertal (DE)**
• **Pehlke, Thomas**
**35440 Linden/Leihgestern (DE)**
• **Brown, Kyle**
**Hartwell, GA 30643 (US)**

(74) Vertreter: **Patentanwälte Olbricht Buchhold Keulertz**
**Partnerschaft mbB**
**Bettinastraße 53-55**
**60325 Frankfurt am Main (DE)**

(56) Entgegenhaltungen:
**EP-A1- 2 916 097**     **WO-A1-2013/106280**
**US-A- 3 190 003**     **US-A1- 2006 236 586**
**US-A1- 2014 373 424**     **US-B1- 6 357 158**

EP 3 392 598 B1

**Beschreibung**

Die Erfindung betrifft ein Absehen gemäß dem Oberbegriff von Anspruch 1 ein Zielfernrohr nach Anspruch 12 und ein Verfahren zum Treffen nach Anspruch 13.

Mit Schusswaffen werden Projektile auf ein anvisiertes Zielobjekt abgefeuert. Zur Unterstützung der Anvisierung werden insbesondere bei größeren Schussdistanzen Zielfernrohre eingesetzt, die an der Schusswaffe angeordnet sind.

Ein Zielfernrohr ist ein Fernrohr mit einer in die Optik integrierten Zieleinrichtung. Die Zieleinrichtung wird Absehen genannt. Das Absehen kann dabei zumindest eine von zwei Hauptfunktionen erfüllen. Die erste Hauptfunktion ist die Abbildung eines Zielpunktes in der Optik, der auch als Haltepunt bezeichnet wird. Dieser wird vom Schützen auf dem Zielobjekt ausgerichtet bzw. positioniert, bevor das Projektil mit der Schusswaffe abgefeuert wird. Damit die optische Lage des Zielpunktes und die tatsächliche Treffpunktlage des Projektils übereinstimmen, weist ein Zielfernrohr Justiermittel auf, mit denen insbesondere Anpassungen aufgrund der Schussdistanz, Seitenwind, eingesetzter Munition, verwendeter Schusswaffe und ähnlichem vorgenommen werden können. Bei großen Schussdistanzen kommt der Entfernung zum Zielobjekt eine hohe Bedeutung zu, die in der Regel jedoch unbekannt ist. Diese muss für die Justierung des Zielfernrohrs vom Schützen bestimmt werden. De 10 2014 102 966 A1 offenbart eine optische Vorrichtung mit einer Messskala.

Hierzu sind aus dem Stand der Technik sogenannte Mildotabsehen üblich. Bei diesen ist auf der senkrechten und waagerechten Linie eines Fadenkreuzes noch eine Skaleneinteilung vorgesehen, deren Einheit MIL genannt wird. Die Skaleneinteilung ist mit Punkten ausgebildet, wobei diese Mildot-Punkte einen Durchmesser von 1/4 mil aufweisen (1 mil ist ca. 1/1000 rad oder 3,44 MOA). 1 MIL im Zielfernrohr entspricht bei Varianten mit konstanter Vergrößerung bei 100 m Entfernung 10 cm und der Durchmesser eines Mildot-Punkts entspricht 2,5 cm. Im Weiteren werden die Begriffe MIL-Skala, MIL-Werte und MIL-Absehen verwendet, wenn es ausschließlich auf den Abstand zwischen den Skalenmarkierungen, jedoch nicht zwingend auf deren Größe und Form ankommt. Das heißt hiermit sind sowohl Varianten mit Mildot-Punkten als auch ohne solche erfasst.

Die MIL-Skaleneinteilung und die Mildot-Punkte dienen also als ablesbares Längenmaß, mit dem entweder eine Bestimmung der Abmessung des Zielobjekts über eine bekannte Schussdistanz zum Zielobjekt, oder umgekehrt der Entfernungsbestimmung über eine bekannte oder zumindest geschätzte Abmessung des Zielobjektes erfolgt. Alternativ kann auch ein Referenzobjekt in der Umgebung des eigentlichen Zielobjektes herangezogen werden, wenn von diesem exaktere Abmessungen bekannt sind.

Absehen können in der ersten oder der zweiten Bildebene von Zielfernrohren angeordnet sein. Bei Zielfernrohren mit variabler Vergrößerung und Anordnung des Absehens in der zweiten Bildebene entsprechen die Größen nur bei einer einzigen bestimmten Vergrößerung den jeweiligen Angaben. Meist wird bei diesen Zielfernrohren die zehnfache Vergrößerung als die Maßhaltige vorgegeben.

Bei Zielfernrohren mit MIL-Absehen und dem Absehen in der ersten Bildebene wird das Absehen mitvergrößert und die MIL-Werte können bei jeder Vergrößerungseinstellung angewendet werden. Zur Bestimmung der Größe oder der Entfernung wird der bestimmte MIL-Wert in folgende Formel eingesetzt: Breite / Entfernung (in gleicher Längeneinheit) = MIL-Wert/ 1000. Je nachdem, ob die Entfernung oder die Breite vorbekannt ist, wird die Formel nach dem zu berechnenden Wert umgestellt.

Nachteilhaft an derartigen MIL-Absehen in der ersten Bildebene ist, dass die MIL-Skaleneinteilung mitvergrößert wird und entweder bei kleiner Vergrößerung schwer ablesbar ist oder bei großer Vergrößerung Teile des Sichtfeldes verdeckt. Im Allgemeinen ist das Ablesen des MIL-Wertes schwierig und die Umrechnung kompliziert, weil fast immer MIL-Werte und vorbekannte Größen in die Berechnung einfließen, die jeweils Kommastellen aufweisen. Damit vergeht wertvolle Berechnungszeit für den Schützen, bevor er überhaupt das Zielfernrohr zur Schussabgabe justieren kann. Verwendet er hierzu einen externen Rechner verliert er außerdem das Zielobjekt kurzzeitig aus den Augen.

Aufgabe der Erfindung ist es daher, ein Absehen bereitzustellen, das eine einfache und schnelle Bestimmung der Entfernung zum Zielobjekt ermöglicht. Das für den Schützen anzuwendende Verfahren zur Entfernungsbestimmung soll insbesondere derart einfach und sicher durchführbar sein, dass er das Zielobjekt nicht aus den Augen verliert. Außerdem soll ein Absehen bereitgestellt werden, dass das Sehfeld auch bei Veränderung der Vergrößerung möglichst wenig verdeckt. Dabei soll das Absehen kostengünstig und sicher Betrieb sein. Aufgabe ist es außerdem ein Zielfernrohr und eine Schusswaffe mit einem solchen Absehen bereitzustellen, welche die Vorteile des Absehens ausschöpfen.

Hauptmerkmale der Erfindung sind im kennzeichnenden Teil vom Anspruch 1, sowie in den Ansprüchen 12 und 13 angegeben. Ausgestaltungen sind Gegenstand der Ansprüche 2-11.

Die Erfindung betrifft ein Absehen gemäß Anspruch 1.

Der Abstand sollte vorzugsweise mit jedem einzelnen natürlichen Zahlenwert größer werden. Die Größenwertskala ist also nicht-linear, weil sich der Abstand zwischen den natürlichen Zahlenwerten ändert. Damit wird erreicht, dass für den Schützen mehrere natürliche Zahlenwerte, also Zahlen ohne Nachkommastellen, zur Verfügung gestellt werden. Das erleichtert das Umrechnen des Zahlenwerts in eine Entfernung. Rechenhilfsmittel werden deshalb nicht gebraucht und der Schütze kann das Zielobjekt während der Berechnung im Auge behalten. Insbesondere bei kleinen Objektgrößen im Verhältnis zur Größenwertskala stehen dem Schützen mehr natürliche Zahlenwerte zur Verfügung als es beispielsweise bei einer linearen MIL-Skala der Fall ist, bei welcher es entscheidend auf das Ablesen einer Nachkommastelle ankommt. Bei großen Objektgrößen im Verhältnis zur Größenwertskala entzerrt sich letztere erfindungsgemäß durch die größeren Abstände zwischen den Ableselinien mit natürlichem Zahlenwert, wodurch das Auge geschont wird. In diesem Fall führen kleine Rundungen auf den nächstliegenden natürlichen Zahlenwert ohnehin nur zu geringen Fehlern der tatsächlichen Schusspunktlage im Verhältnis zur Zielpunktlage.

Erfindungsgemäß sind die Ableselinien unter der ersten Hauptlinie angeordnet. Bei einer Platzierung unterhalb einer horizontalen Visierlinie, die bei Lebewesen typischerweise im oberen Bereich angelegt wird, sind hierdurch nur geringe Hub- und Senkbewegungen notwendig, um die erste Haltelinie an einem oberen Bezugspunkt des Zielobjektes anlegen zu können.

In einer optionalen Ausführungsform ist der ersten Hauptlinie eine erste Umrechnungsformel zugeordnet, in welche der ermittelte Zahlenwert, der am zweiten Bezugspunkt des Zielobjekts abgelesen wird, als Eingangsgröße einzusetzen ist. Hierdurch kann der Schütze in den meisten Anwendungsfällen natürliche Zahlenwerte ablesen und in die Umrechnungsformel einsetzen, wodurch die Rechenaufgabe einfach lösbar ist. Die erste Umrechnungsformel sollte also eine Entfernungsfunktion in Abhängigkeit vom Zahlenwert sein. Vorzugsweise ist die erste Umrechnungsformel an der ersten Hauptlinie abgebildet. Der Schütze hat sie daher vor Augen, ohne seinen Blick abwenden zu müssen und er kann das Zielobjekt weiter beobachten. Bei einer speziellen Variante der Erfindung werden die Zahlenwerte mit zunehmendem Abstand der zugehörigen Ableselinie von der ersten Hauptlinie kleiner. Immer dann wenn das Zielobjekt noch halbwegs groß für den Schützen darstellbar ist, insbesondere durch einen Zoom, kann also mit kleinen Zahlenwerten gerechnet, was die Rechenaufgabe einfach macht. Erst größer entfernte Ziele machen ein Rechnen mit größeren abgelesenen Zahlenwerten notwendig, wobei die Rechenkomplexität aufgrund der inkonstanten Skalierung und der verfügbaren natürlichen Zahlenwerte gering gehalten wird.

Vorzugsweise sind die Zahlenwerte mit einem Rautezeichen, insbesondere mit #, gekennzeichnet, wobei das Rautezeichen vorzugsweise vor dem Zahlenwert steht. Das Rautezeichen wird heute in vielen Bereichen als Hinweis auf eine Ziffernangabe verstanden, sodass auch der Schütze erkennt, dass es sich um eine einheitenlose Angabe handelt.

Gemäß einer optionalen Ausführungsform ist vorgesehen, dass mit der ersten Umrechnungsformel eine Entfernung des Absehens zum Zielobjekt dadurch berechenbar ist, dass der ermittelte Zahlenwert mit einer definierten ersten Distanz und einer vom Zielobjekt bekannten Größe zwischen dem ersten und zweiten Bezugspunkt zu multiplizieren ist. Damit sind nur Multiplikationen durchzuführen die meist einfacher im Kopf durchzuführen sind als Divisionen. Hiervon sind auch nur zwei Stück notwendig. Die erste Umrechnungsformel lautet also vorzugsweise: D(W) = W * D1 (in Metern) * X (in Metern) * 1/Meter. Hierbei sind D1 die definierte erste Distanz und X die vom Zielobjekt bekannte, ersatzweise auch die durch Schätzung bekannte, Größe. Das Herauskürzen durch den Zusatzfaktor 1/Meter ist notwendig, um die korrekte Einheit herzustellen, ist für den Schützen in der Praxis jedoch irrelevant. Dem Grunde nach kann diese Einheit 1/Meter bzw. Meter$^{-1}$ als Einheit des Zahlenwerts angesehen werden, um zu einem mathematisch korrekten Ergebnis zu kommen.

Für eine praxisgerechte und dennoch einfache Umrechnungsformel bietet es sich eine Variante an, bei der die definierte erste Distanz 100 m beträgt und die bekannte Größe (X) in Metern einzusetzen ist. Damit ist eine der zwei notwendigen Multiplikation, nämliche diejenige mit 100 m, besonders leicht im Kopf durchführbar.

Nach einer Dimensionierung der Größenwertskala ist vorgesehen, dass der kleinste bestimmbare Zahlenwert, der auf dem Abstand zwischen der ersten Hauptlinie und der am weitest entfernt angeordneten Ableselinie beruht, maximal 20 MIL, vorzugsweise maximal 15 MIL und besonders bevorzugt maximal 10 MIL eines MIL-Absehens entspricht. Damit ist die Größenwertskala derart dimensioniert, dass das Zielobjekt hinreichend groß sichtbar ist, jedoch immer noch eine hinreichend große Umgebung um das Zielobjekt beobachtet werden kann. Praxisgerecht ist zudem eine optionale Beschränkung der Skalierung, bei welcher der größte bestimmbare Zahlenwert, der auf dem Abstand zwischen der ersten Hauptlinie und der am nächsten liegenden Ableselinie beruht, einem Wert zwischen 0,3 MIL und 0,9 MIL, vorzugsweise zwischen 0,4 MIL und 0,8 MIL und besonders bevorzugt zwischen 0,5 MIL und 0,7 MIL eines MIL-Absehens entspricht. Ansonsten liegen die benachbarten Ableselinien zu dicht beieinander, um noch ein präzises Ablesen zu ermöglichen.

Theoretisch könnte man das Absehen so im Zielfernrohr platzieren, dass man die Ausrichtung der ersten Hauptlinie und der Ableselinien senkrecht zur Verbindungslinie zwischen dem ersten und zweiten Bezugspunkt durch Drehen einstellen kann. In der Praxis sind die bekannten Größen von Zielobjekten jedoch fast immer vertikale Abmessungen bzw. Höhen. Für diese Anwendungsfälle genügt eine horizontale Ausrichtung der ersten Hauptlinie und der Ableselinien.

Damit auch bei bekannten horizontalen Abmessungen ein Zahlenwert für eine einfache Umrechnung bereitgestellt werden kann, bietet sich eine optionale Ergänzung derart an, dass die Größenwertskala eine zweite Hauptlinie aufweist, die senkrecht zu der ersten Hauptlinie ausgerichtet ist, wobei die Ableselinien entlang der zweiten Hauptlinie angeordnet sind, wobei die zweite Hauptlinie eine zweite Anlegelinie zum Anlegen an einem dritten Bezugspunkt des Zielobjekts ausbildet, und wobei sich die Ableselinien von der zweiten Hauptlinie weg erstrecken und das jeweilige freie Ende der Ableselinien einen Ablesepunkt zum Anlegen an einem vierten Bezugspunkt des Zielobjekts ausbildet. Die Länge der Ableselinie, von der der Zahlenwert herangezogen wird, entspricht dann im Wesentlichen dem Abstand zwischen dem dritten und vierten Bezugspunkt des Zielobjektes. Der Schütze wird dann durch Anheben oder Senken des Gewehrs bzw. des Zielfernrohrs die Ableselinien zwischen dem dritten und vierten Bezugspunkt platzieren, um diejenige auszuwählen, deren Länge am ehesten dem Abstand zwischen dem dritten und vierten Bezugspunkt entspricht.

Für eine klare visuelle Gliederung der Größenwertskala ist die zweite Hauptlinie bevorzugt nur auf einer Seite der ersten Hauptlinie angeordnet. Insbesondere nämlich auf der Seite, auf der auch die Ableselinien liegen. Besonders selbsterklärend ist die Größenwertskala, wenn die erste und zweite Hauptlinie eine T-Kreuzung ausbilden.

Vorzugsweise werden die Zahlenwerte mit zunehmendem Abstand des zugehörigen Ablesepunkts von der zweiten Hauptlinie kleiner. Bei vernünftiger Schussdistanz mit hinreichend groß darstellbarem Zielobjekt wird durch die kleinen Zahlenwerte eine einfache Berechnung ermöglicht.

Damit das Zielobjekt und damit auch dessen Bezugspunkte möglichst wenig verdeckt werden, bietet sich eine Liniengestaltung an, bei welcher der Ablesepunkt unmittelbar von einem freien Linienende der Ableselinie ausgebildet ist. Alternativ sind die Ableselinien aber auch mit einem geometrischen Linienabschluss am freien Linienende ausbildbar, insbesondere mit einem Punkt, einem Querstrich oder einer Pfeilspitze.

Nach einem speziellen Design der Größenwertskala wird der Abstand zwischen der zweiten Hauptlinie und dem Ablesepunkt einer Ableselinie mit zunehmendem Abstand der Ableselinie von der ersten Hauptlinie größer. Damit kann der Schütze durch eine Hub- oder Senkbewegung die Längen der Ableselinien der Reihe nach mit dem dritten und vierten Bezugspunkt abgleichen. Bei einer Platzierung unterhalb einer horizontalen Visierlinie, wobei die Ableselinien unterhalb der ersten Haltelinie angeordnet sind, fallen bei einem hohen Zoomfaktor außerdem die nicht nutzbaren kleinen Zahlenwerte aus dem Sichtbereich heraus und die eng beieinander liegenden Ableselinien mit größeren Zahlenwerten lassen sich durch die große Vergrößerung der Größenwertskala mit dem Auge gut differenzieren.

Bei einer Designvariante der Größenwertskala sind alle Ablesepunkte von den Ableselinien, die sich in die gleiche Richtung von der zweiten Hauptlinie weg erstrecken, auf einer (imaginären) Geraden angeordnet sind. Wenn auf zwei Seiten der zweiten Hauptlinie Ableselinien angeordnet sind, ergeben sich also zwei solcher imaginärer Geraden über die Ablesepunkte. Das ist optisch ansprechend und mit dem Auge gut zu verarbeiten.

Weiterhin ist optional vorgesehen, dass der zweiten Hauptlinie eine zweite Umrechnungsformel zugeordnet ist, in welche der ermittelte Zahlenwert, der am vierten Bezugspunkt des Zielobjekts abgelesen wird, als Eingangsgröße einzusetzen ist. Hierdurch kann der Schütze in den meisten Anwendungsfällen natürliche Zahlenwerte ablesen und in die zweite Umrechnungsformel einsetzen, wodurch die Rechenaufgabe einfach lösbar ist. Die zweite Umrechnungsformel sollte also eine Entfernungsfunktion in Abhängigkeit vom Zahlenwert sein. Vorzugsweise ist die zweite Umrechnungsformel an der zweiten Hauptlinie abgebildet. Der Schütze hat sie daher vor Augen, ohne seinen Blick abwenden zu müssen. Außerdem ist die zweite Umrechnungsformel als zur verwendeten zweiten Hauptlinie gehörig erkennbar.

In einer speziellen Variante ist mit der zweiten Umrechnungsformel eine Entfernung des Absehens zum Zielobjekt dadurch berechenbar, dass der ermittelte Zahlenwert mit einer definierten zweiten Distanz und einer vom Zielobjekt bekannten Größe zwischen dem dritten und vierten Bezugspunkt zu multiplizieren ist. Zwei Multiplikationen sind im Kopf einfach durchführbar, insbesondere durch die Verwendung natürlicher Zahlenwerte. Die zweite Umrechnungsformel lautet also vorzugsweise: $D(W, Y) = W * D2$ (in Metern) $* Y$ (in Metern) $* 1/\text{Meter}$. Hierbei sind $D2$ die definierte zweite Distanz und $Y$ die vorbekannte oder zumindest durch Schätzung annähernd bekannte Größe des Zielobjekts zwischen dem dritten und vierten Bezugspunkt.

Damit der Schütze nicht versehentlich falsche definierte Distanzen verwendet, bietet es sich an, die Größenwertskala so aufzubauen, dass die definierte erste Distanz der definierten zweiten Distanz entspricht. Bei einem militärischen Einsatz sind die Zielobjekte allerdings meist höher als breit. Für diesen Fall bietet es sich an, die definierte zweite Distanz halb so groß festzulegen wie die definierte erste Distanz.

Des Weiteren ist die Kopfberechnung besonders einfach durchführbar, wenn die definierte zweite Distanz 100 m oder 200 m beträgt und die bekannte Größe in Metern einzusetzen ist.

Eine praxisgerechte Dimensionierung der Größenwertskala gelingt bei einer Ausgestaltung, nach der der Zahlenwert, der auf dem Abstand der zweiten Hauptlinie und dem am weitest entfernt angeordneten Ablesepunkt beruht, maximal 10 MIL, vorzugsweise maximal 7 MIL und besonders bevorzugt maximal 5 MIL eines MIL-Absehens entspricht.

Um eine zu hohe Liniendichte, die schwer mit dem Auge zu erfassen ist, zu vermeiden, bietet sich eine optionale Ausgestaltung an, bei der sich zumindest in einem Fall die mittlere Ableselinie von drei benachbarten Ableselinien in entgegengesetzter Richtung von der zweiten Hauptlinie weg erstreckt als die beiden äußeren der drei benachbarten Ableselinien.

Besonders zu bevorzugen ist eine Variante, bei der sich die Ableselinien, welche näher an der ersten Hauptlinie angeordnet sind, abwechselnd in entgegengesetzter Richtung von der zweiten Hauptlinie weg erstrecken. Hier liegen die Ableselinien nämlich enger beieinander und können bei abwechselnder Ausrichtung besser mit dem Auge erfasst werden.

Außerdem erweist es sich als anwenderfreundlich, wenn sich die Ableselinien, welche weiter entfernt von der ersten Hauptlinie angeordnet sind, in gleicher Richtung von der zweiten Hauptlinie weg erstrecken. Hierdurch findet der Schütze den zu bestimmenden Zahlenwert in diesem Bereich mit besonders wenigen Bewegungen des Absehens über dem Zielobjekt.

Eine selbsterklärende Größenwertskala aufgrund einer geringen Informationsdichte ist optional dadurch erzielbar, dass dem Abstand zwischen der zweiten Hauptlinie und dem jeweiligen Ablesepunkt einer der Ableselinien der gleiche Zahlenwert zugeordnet ist, wie dem Abstand zwischen der ersten Hauptlinie und dieser Ableselinie.

Für Anwendungsfälle, in welchen überwiegend die Höhe der Zielobjekte vorbekannt ist, bietet sich eine Ausgestaltung an, bei der die erste Hauptlinie horizontal und die zweite Hauptlinie vertikal ausgerichtet ist. Alternativ kann in Anwendungsfällen, in welchen eher die horizontale Erstreckung (Breite/Länge) der Zielobjekte bekannt sind, z.B. bei Fahrzeugen, auch vorgesehen sein, dass die erste Hauptlinie vertikal und die zweite Hauptlinie horizontal ausgerichtet ist.

Damit der Schütze die den Ableselinien zugeordneten Zahlenwerte erfassen kann, ist in einer Ausführungsform vorgesehen, dass die Zahlenwerte an wenigstens zwei der Ableselinien abgebildet sind. Eine ansprechend, platzeffiziente Anordnung gelingt insbesondere, wenn der Zahlenwert jeweils an dem freien Ende der Ableselinien abgebildet ist. Vorzugsweise sind nur Zahlenwerte an Ableselinien abgebildet, welchen ein natürlicher Zahlenwert zugeordnet ist. Soweit sinnvoll sollte auf Ableselinien mit nicht-natürlichem Zahlenwert verzichtet werden. Aufgrund der großen Abstände zwischen zwei Ableselinien mit natürlichem Zahlenwert an einem Ende der Größenskala, ist es ergänzend aber sinnvoll, wenn wenigstens zwei Ableselinien kein natürlicher Zahlenwert zugeordnet ist. Besonders selbsterklärend ist eine optionale Ausgestaltung derart, dass den Ableselinien, denen kein natürlicher Zahlenwert zugeordnet ist, die Hälfte eines natürlichen Zahlenwertes zugeordnet ist. Grafisch lässt sich dies optional dadurch unterstreichen, dass die Ableselinien, denen ein natürlicher Zahlenwert zugeordnet ist, mit einer durchgehenden Linie dargestellt sind. Die Ableselinien, denen kein natürlicher Zahlenwert zugeordnet ist, können hingegen optional mit einer unterbrochenen Linie dargestellt sein.

Optional kann des Weiteren vorgesehen sein, dass Leuchtmittel vorgesehen sind, mit denen zumindest Teile der Größenwertskala beleuchtbar sind. Damit lässt sich die Bestimmung des Zahlenwertes auch bei schlechten Lichtverhältnissen schnell durchführen. Sollte das Zielfernrohr weitere beleuchtete Bauteile haben, so sind die Leuchtmittel für die Größenwertskala vorzugsweise einzeln aktivierbar. Damit können sie nach der meist nur einmalig durchzuführenden Entfernungsbestimmung wieder ausgeschaltet werden.

Die Erfindung betrifft außerdem ein Absehen für ein Zielfernrohr, mit einer transparenten Trägerplatte, auf der eine Visierhilfe abgebildet ist, wobei die Visierhilfe eine horizontale Visierachse und eine vertikale Visierachse aufweist, welche in ihrem Schnittpunkt einen Zielpunkt definieren und die transparente Trägerplatte in vier Quadranten unterteilen.

Bevorzugt schneidet die vertikale Visierachse die horizontale Visierachse in der horizontalen Mitte der Visierhilfe. Damit kann ein gleich großer Bereich links und rechts des Zielpunkts im Auge behalten werden.

Außerdem ist es zu bevorzugen, wenn die horizontale Visierachse die vertikale Visierachse in der vertikalen Mitte der Visierhilfe schneidet. Damit liegt der Schnittpunkt tendenziell eher im Bereich der optischen Achse eines Zielfernrohres. Hier ist die Bildqualität meist am höchsten, sodass die Verwendung dieses Bereichs bei der Anvisierung des Zielobjekts zu einer maximalen Treffersicherheit führt.

Bei einer speziellen Ausführungsform des Absehens ist vorgesehen, dass ein oberhalb der horizontalen Visierachse liegender Abschnitt der vertikalen Visierachse (kürzer ist als ein unterhalb der horizontalen Visierachse liegender Abschnitt. Hierdurch kann das obere Sehfeld freigehalten werden, um das Zielobjekt besser sichten zu können. Außerdem ist der vertikal untere Abschnitt der vertikalen Visierachse als Haltelinie nutzbar, dies insbesondere wenn der Verstellweg des Zielfernrohres nicht ausreicht. Hierzu kann der Anwender anstatt des Schnittpunkts einen Skalenstrich einer unteren vertikalen Skala als Haltepunkt nutzen. Praxisgerecht ist insbesondere eine Ausführungsform, bei der ein oberhalb der horizontalen Visierachse liegender Abschnitt der vertikalen Visierachse weiter entfernt von einem Rand der transparenten Trägerplatte endet als ein unterhalb der horizontalen Visierachse liegender Abschnitt, und vorzugsweise auch weiter entfernt als die Enden der horizontalen Visierachse.

Für eine Anordnung der Trägerplatte in einem tubusförmigen Gehäuse eines Zielfernrohrs, bietet sich insbesondere eine Trägerplatte mit kreisförmigem (Umfangs-)Rand an.

Durch die vertikale und horizontale Visierachse kann definiert werden, dass der erste Quadrant ein oberer linker Quadrant, der zweite Quadrant ein oberer rechter Quadrant, der dritte Quadrant ein unterer linker Quadrant und der vierte Quadrant ein unterer rechter Quadrant ist.

Optional ist vorgesehen, dass die horizontale Visierachse und/oder die vertikale Visierachse MIL-Skalenstriche einer MIL-Skala tragen. Hierdurch ist eine Entfernungsbestimmung oder eine Größenbestimmung des Zielobjektes durchführbar. Um eine hinreichend präzise Bestimmung vornehmen zu können, ist es vorteilhaft eine Skaleneinteilung mit nicht-natürlichen MIL-Zwischenwerten vorzusehen. Um eine möglichst feine ablesbare Unterteilung bereitzustellen, ist optional vorgesehen, dass sich die nicht-natürlichen geraden und ungeraden MIL-Zwischenwerte zwischen wenigstens zwei natürlichen MIL-Werten in entgegengesetzter Richtung von der horizontalen Visierachse wegerstrecken. Es handelt sich bevorzugt um 0,1 MIL Zwischenwerte.

Bei einem Einsatzort des Absehens in der ersten Bildebene eines Zielfernrohrs mit variabler Vergrößerung werden unterschiedlich große Bereiche der Visierhilfe genutzt. Zur Unterstützung des menschlichen Auges bei den unterschiedlichen Vergrößerungen, ist in einer Ausführungsform vorgesehen, dass die MIL-Skalenstriche mit zunehmendem Abstand vom Zielpunkt stufenweise eine größere Strichstärke und/oder länger ausgeführt und/oder in größeren Abständen voneinander angeordnet sind.

Gemäß einer weiteren Ausführungsform nimmt die Strichstärke der horizontalen Visierachse und/oder der vertikalen Visierachse mit zunehmendem Abstand vom Zielpunkt stufenweise zu.

Eine Unterstützung des menschlichen Auges gelingt auch mit einer Ausgestaltung, bei welcher die horizontale Visierachse beabstandet von dem Zielpunkt als Doppellinie ausgeführt ist. Im Zentrum um den Zielpunkt sollte sie hingegen als einfache Linie ausgeführt sein. Eine Doppellinie verdeckt außerdem weniger von der Umgebung des Zielobjektes.

In einer speziellen Variante laufen die zwei Linien der Doppellinie mit zunehmendem Abstand vom Zielpunkt konisch auseinander. Im äußeren Bereich des Absehens wird daher trotz zunehmender Strichstärke nur wenig von der Zielobjektumgebung verdeckt. Es bietet sich eine Ausgestaltung an, bei der die Doppellinie bei einem vollen MIL-Wert startet, der bevorzugt zwischen 3 und 7 MIL, weiter bevorzugt zwischen 4 und 6 MIL und besonders bevorzugt bei 5 MIL liegt. In dem Bereich, der bei der Anvisierung genutzt wird, liegt dann also die einzelne Linie und der äußere Bereich mit der Doppellinie führt das Auge zu dieser einzelnen Linie und dem Zielpunkt.

Um möglichst wenig von der anvisierten Treffpunktlage auf dem Zielobjekt zu verdecken, ist eine Ausgestaltung von Vorteil, bei der die horizontale Visierachse und/oder die vertikale Visierachse im Bereich um den Zielpunkt von einer Strichlinie ausgebildet sind. Hierbei bietet es sich an, die Längen der Linienabschnitte und der Linienunterbrechungen der Strichlinie so zu wählen, dass diese die MIL-Skala im Bereich um den Zielpunkt ausbilden bzw. ersetzen. Mit anderen Worten treten diese hier an die Stelle von MIL-Skalenstrichen, die ansonsten senkrecht zur Strichlinie angeordnet wären.

Ferner ist optional vorgesehen, dass das Absehen ein Leuchtmittel aufweist, mit dem die horizontale Visierachse und/oder die vertikale Visierachse im Bereich um den Zielpunkt beleuchtbar sind. Damit ist auch ein augenschonender Einsatz bei schlechten Sichtverhältnissen möglich. Anpassung gelingen, wenn zumindest zwei Leuchtstärken einstellbar sind.

In einer besonderen Ausführungsform sind Teile der Visierhilfe und/oder der Größenwertskala mit Chromstrukturen ausgebildet, welche bei einem zugehörigen und aktivierten Leuchtmittel leuchten und vorzugsweise ohne aktivierte Leuchtmittel eine erhöhte Opazität aufweisen. Damit sind die Chromstrukturen auch ohne aktivierte Leuchtmittel sichtbar. Die Leuchtmittel strahlen dabei die Chromstruktur vorzugsweise von einer Seite an und können somit relativ einfach mit elektrischer Energie versorgt werden.

Besonders vorteilhaft ist eine optionale Dimensionierung derart, dass die beleuchteten Bereiche um den Zielpunkt aus Strukturen ausgebildet sind, die eine Strichstärke von maximal 4 μm aufweisen. Damit wird das Zielobjekt selbst bei großen Vergrößerungen des Absehens kaum durch diese Strukturen verdeckt.

Eine weitere optionale Ergänzung zur Entfernungs- und/oder Objektgrößenbestimmung kann darin bestehen, dass beabstandet vom Zielpunkt auf der horizontalen Visierachse ein Raster ausgebildet ist, wobei MIL-Skalenstriche, die innerhalb des Rasters liegen, optisch dadurch verlängert sind, dass am äußeren Rand des Rasters jeweils ein Punkt in der Verlängerungsachse des MIL-Skalenstrichs abgebildet ist. Mit dem Raster können die MIL-Werte für die Höhe und die Breite eines Zielobjekts gleichzeitig erfasst werden. Vorzugsweise ist das Raster 1 MIL breit und 1 MIL hoch. Das Raster stört am wenigsten und liegt dennoch auch bei höherer Vergrößerung im Sichtbereich des Absehens, wenn es zwischen 4 MIL und 5 MIL der MIL-Skala angeordnet ist.

Für die Bereitstellung von Markierungen für eine besonders feine Unterteilung der MIL-Werte kann vorgesehen sein, dass innerhalb des Rasters halbe Werte zwischen MIL-Skalenstrichen durch vertikal ausgerichtete unterbrochene Linien abgebildet sind, die jeweils bis an den äußeren Rand des Rasters führen.

Optional korrespondieren die Linienabschnitte und die Linienunterbrechungen der unterbrochenen Linien mit MIL-Werten. Hierdurch sind die MIL-Werte besonders einfach bestimmbar, wobei die unterbrochenen Linien das Zielobjekt nur geringfügig verdecken.

Eine besonders vorteilhafte Ausführungsform ist eine punktförmige Ausgestaltung der Linienabschnitte, wodurch ein Punktraster ausgebildet ist. Dabei sollte jedem punktförmigen Linienabschnitt (Punkt) ein horizontaler und ein vertikaler MIL-Wert zugeordnet sein.

In einer Variante ist an einem horizontalen Ende des Rasters eine vertikale MIL-Skala abgebildet, vorzugsweise an dem äußeren Ende des Rasters, die mit den Linienabschnitten und den Linienunterbrechungen der unterbrochenen Linien korrespondiert.

Des Weiteren kann vorgesehen sein, dass ein zum Raster spiegelbildlich auf der gegenüberliegenden Seite der vertikalen Visierachse ausgebildetes zweites Raster abgebildet ist. Hierdurch kann der Schütze entscheiden, welche Umgebungsseite des Zielobjekts während der MIL-Wertbestimmung beobachtet werden soll, und welche durch das Verschwenken des Zielfernrohres vernachlässigt wird.

Damit keine Bedienungsanleitung mitgeführt werden muss und die Berechnungsformeln immer verfügbar sind, können am unteren Ende der Visierhilfe eine MIL-Entfernungsformel und/oder eine MIL-Zielobjektgrößenformel abgebildet sein.

Die MIL-Entfernungsformel lautet:

Entfernung in Metern (E) = bekannte Zielobjektgröße in Metern (X, Y) / abgelesener MIL-Wert x 1000 m

Dass die MIL-Zielobjektgrößenformel lautet:

Zielobjektgröße in Metern (X, Y) = bekannte Entfernung in Metern (E) x abgelesener MIL-Wert / 1000 m

Es versteht sich, dass die Bezeichnungen der Berechnungsgrößen auch anders gewählt sein können, insbesondere in anderen Sprachen oder sinnähnlichen Begriffen und Abkürzungen.

Darüber hinaus betrifft die Erfindung ein Absehen, bei dem die Größenwertskala in einem der vier Quadranten der Visierhilfe angeordnet ist, vorzugsweise vollständig. Damit können sich die Größenwertskala und die Visierhilfe die Trägerplatte teilen. Dem Schützen wird bei dieser Kombination eine schnelle einfache Bestimmung der Entfernung über die Größenwertskala ermöglicht. Bei der sich anschließenden Zielerfassung mit der Visierhilfe wird der Schütze hingegen kaum durch die Größenwertskala beeinträchtigt.

Es bietet sich insbesondere eine Ausführungsform an, bei der die Größenwertskala unterhalb der horizontalen Visierachse angeordnet ist. Damit wird das obere Sehfeld freigehalten. Gemäß einer speziellen Variante ist die Größenwertskala in dem Quadranten der Visierhilfe angeordnet, der links von der vertikalen Visierachse und unterhalb der horizontalen Visierachse angeordnet ist. Diese Position ist insbesondere für Rechtshänder ergonomischer beim Handling mit der Schusswaffe.

Nach einer bevorzugten Ausgestaltung liegt die Größenwertskala vollständig in einem Bereich um den Zielpunkt, der sich vertikal von 0 MIL bis ±10 MIL und horizontal von 0 MIL bis ±10 MIL, bevorzugt 0 MIL bis ±8 MIL, einer optional abgebildeten MIL-Skala erstreckt. Damit liegt die Größenwertskala in dem Bereich des Absehens, der bei größeren Schussdistanzen trotz des Zooms noch sichtbar ist, und in dem eine präzise Erfassung des zum Zielobjekt passenden Zahlenwerts möglich ist.

In einer speziellen Ausführungsform ist die erste Hauptlinie genau 2,0 MIL von der horizontalen Visierachse entfernt angeordnet. Optional kann die erste Hauptlinie auch genau 2,0 MIL von der vertikalen Visierachse entfernt enden. Die inneren 2 MIL um den Zielpunkt werden so von verdeckenden Darstellungen freigehalten. Um die Nutzung der Visierhilfe nicht zu stören, sollte auch keine der Ableselinien näher als 2,0 MIL an die vertikale Visierachse heranragen.

Vorzugsweise sind in einem der anderen Quadranten entlang einer (imaginären) Geraden, vorzugsweise einer Diagonalen mit Schnittpunkt mit dem Zielpunkt, Zoomfaktoren abgebildet, wobei ein eingestellter Zoom eines Zielfernrohrs dadurch bestimmbar ist, dass der äußerste sichtbare Zoomfaktor abgelesen wird. Der eingestellte Zoom zur Erfassung des Zielobjekts ist für den Schützen ein erster guter Indikator für die Schussdistanz. Die Zoomfaktoren sind vorzugsweise in dem Quadranten abgebildet, der rechts von der vertikalen Visierachse und unterhalb der horizontalen Visierachse angeordnet ist. Auch hierdurch wird das obere Sehfeld freigehalten.

Ferner betrifft die Erfindung ein Zielfernrohr mit einem Gehäuse gemäß Anspruch 12.

In einer speziellen Ausführungsform weist das Zielfernrohr entlang des Strahlengangs hinter dem Objektiv eine erste Bildebene auf, wobei das Absehen in der ersten Bildebene angeordnet ist. Damit liegt das Absehen also bevorzugt in dem Fokus des Objektivs und wird mit vergrößert, sofern das Zielfernrohr einen variablen Zoom aufweist.

Optional kann das Zielfernrohr entlang des Strahlengangs hinter der ersten Bildebene eine Linsenanordnung und entlang des Strahlengangs hinter der Linsenanordnung eine zweite Bildebene aufweisen. Diese Linsenanordnung dient der Vergrößerten Darstellung der Abbildung in der ersten Bildebene in der zweiten Bildebene und außerdem der Aufrichtung des Bildes. Hierzu bildet die Linsenanordnung ein sogenanntes Umkehrsystem.

Besonders geeignet ist das Absehen für Zielfernrohre, die eine verstellbare optische Vergrößerung bzw. einen optischen Zoom aufweisen. Das hierzu vorgesehen Umkehrsystem weist hierzu bevorzugt zwei Linseneinheiten auf, die zwischen der ersten und zweiten Bildebene entlang des Strahlengangs einzeln verschiebbar gelagert sind. Eine einfache Einstellung des Zooms gelingt, wenn die einzelnen Verschiebungen der zwei Linseneinheiten derart kinematisch gekoppelt sind, dass eine Position einer der Linseneinheiten von der Position der anderen der Linseneinheiten abhängig ist.

Das Zielfernrohr sollte außerdem eine Halterung zum Anbringen in einer festgelegten, vorbestimmten Position relativ zu einem Lauf einer Schusswaffe aufweisen.

In dem Gehäuse ist vorzugsweise ein Okular angeordnet, wobei vorzugsweise das Objektiv an einem ersten Ende und das Okular an einem zweiten Ende des Gehäuses angeordnet sind.

Desweiteren besitzen hochzoomige Zielfernrohre vor dem Okular und hinter dem Umkehrsystem in der Regel eine sogenannte Zerstreungslinse. Hierdurch entsteht eine geschlossene Visierung. In Abwandlungen können auch Bildverstärker hinter der zweiten Bildebene angeordnet sein. Das ermöglicht auch eine Nachtsicht.

Die Erfindung betrifft zudem eine Schusswaffe mit einem Zielfernrohr wie es vor und nachstehend beschrieben ist. Mit einer solchen Schusswaffe lässt sich ein Zielobjekt erfassen, das Zielobjekt präzise mit dem Absehen ausmessen und anvisieren, die Zielpunktlage ausrichten, vorzugsweise durch Justierung des Zielfernrohrs, und ein präziser Schuss auf das Zielobjekt abgeben. Das Zielfernrohr sollte an der Schusswaffe montiert sein, insbesondere schussfest. Im Detail sollte das Zielfernrohr in einer festgelegten, vorbestimmten Position relativ zu einem Lauf der Schusswaffe befestigt sein.

Außerdem betrifft die Erfindung ein Verfahren zum Treffen eines Zielobjekts gemäß Anspruch 13.

Damit wird das Zielobjekt auf einfache Weise, schnell und sicher vom Projektil getroffen. Die Justierung des Zielfernrohrs kann auch unter der Berücksichtigung von Seitenwind und/oder vertikalen Luftströmungen erfolgen. Außerdem kann die Justierung des Zielfernrohrs unter der Berücksichtigung der relevanten Parameter der eingesetzten Schusswaffe und/oder der eingesetzten Munition erfolgen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

Fig. 1    ein Absehen, von dem die Trägerplatte bis zu Ihrem Rand abgebildet ist;
Fig. 2    einen Ausschnitt aus dem Zentrum des Absehens gemäß Fig. 1;
Fig. 3    eine Vergrößerung der Größenwertskala, die in den Fig. 1 und 2 gezeigt ist;
Fig. 4    eine Vergrößerung des Rasters, das in Fig. 1 auf der horizontalen Visierachse gezeigt ist; und
Fig. 5    eine schematische Darstellung eines Längsschnitts durch ein Zielfernrohr mit einem Absehen gemäß Fig. 1.

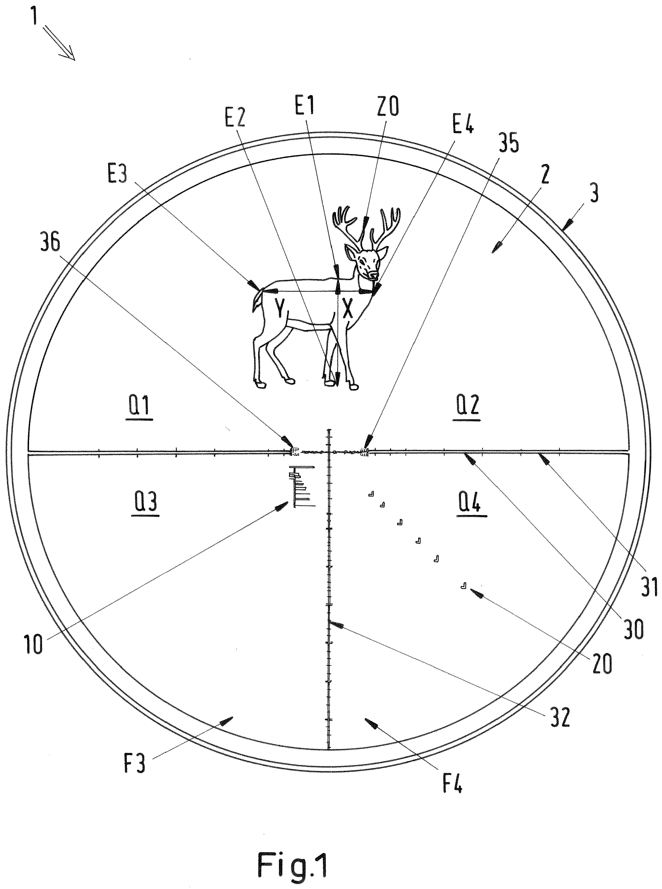

**Fig. 1** zeigt ein Absehen 1 für ein Zielfernrohr. Das Absehen 1 weist eine transparente Trägerplatte 2 auf, auf der verschiedene grafische Elemente angeordnet sind. Die Trägerplatte 2 hat einen Rand 3, der vorliegend kreisförmig ausgestaltet ist. Außerdem ist die Trägerplatte 2 vorzugsweise zumindest auf der Seite, auf der die grafischen Elemente angeordnet sind eben ausgeführt. Besonders bevorzugt ist die Trägerplatte 2 eine flache ebene Platte.

Man erkennt als grafische Elemente eine auf der Trägerplatte 2 abgebildete Größenwertskala 10, eine Visierhilfe 30, Zoomfaktoren 20 sowie eine MIL-Entfernungsformel F3 und eine MIL-Zielobjektgrößenformel F4.

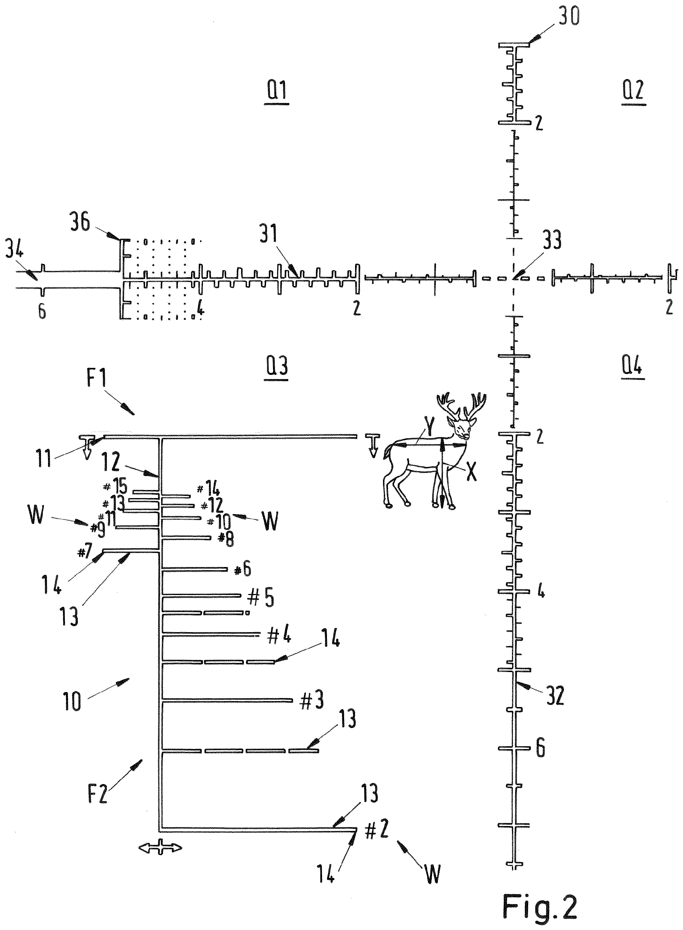

Die Visierhilfe 30 weist eine horizontale Visierachse 31 und eine vertikale Visierachse 32 auf, welche in ihrem Schnittpunkt einen Zielpunkt (siehe Bezugszeichen 33 in Fig. 2) definieren und die transparente Trägerplatte 2 in vier Quadranten Q1, Q2, Q3, Q4 unterteilen. Die vertikale Visierachse 32 und die horizontale Visierachse 31 schneiden sich in der horizontalen und vertikalen Mitte der Visierhilfe 30 bzw. der Trägerplatte 2. Der erste Quadrant Q1 ist ein oberer linker Quadrant, der zweite Quadrant Q2 ein oberer rechter Quadrant Q2, der dritte Quadrant Q3 ein unterer linker Quadrant und der vierte Quadrant Q4 ein unterer rechter Quadrant.

Man erkennt, dass ein oberhalb der horizontalen Visierachse 31 liegender Abschnitt der vertikalen Visierachse 32 kürzer ist als ein unterhalb der horizontalen Visierachse 31 liegender Abschnitt. Der oberhalb der horizontalen Visierachse 31 liegende Abschnitt der vertikalen Visierachse 32 endet hierdurch weiter entfernt von dem Rand 3 der transparenten Trägerplatte 2 als der unterhalb der horizontalen Visierachse 31 liegende Abschnitt. Weil auch die horizontale Visierachse 31 bis zum Randbereich der Trägerplatte 2 geführt ist, endet der oberhalb der horizontalen Visierachse 31 liegende Abschnitt der vertikalen Visierachse 32 auch weiter entfernt vom Rand 3 als die Enden der horizontalen Visierachse 31. Hierdurch wird das obere Sehfeld freigehalten, um ein exemplarisch dargestelltes Zielobjekt ZO besser sichten zu können.

Am Umfang und damit am Rand 3 der Trägerplatte erkennt man eine ringförmige Struktur. Dieser Bereich dient insbesondere der Aufnahme der Trägerplatte 2 in einer Fassung. Zur Vermeidung von Streulicht kann dieser Randbereich opak beschichtet oder aufgeraut werden.

Der vertikal untere Abschnitt der vertikalen Visierachse 32 kann bei weiten Schussdistanzen als Haltelinie genutzt werden, dies insbesondere wenn der Verstellweg des Zielfernrohres nicht ausreicht. Hierzu kann der Anwender einen Skalenstrich einer unteren vertikalen Skala auf der vertikalen Visierachse 32 ersatzweise als Haltepunkt nutzen.

Die MIL-Entfernungsformel F3 und die MIL-Zielobjektgrößenformel F4 sind links und rechts von der vertikalen Visierachse 32 am unteren Ende der Visierhilfe 30 sowie am unteren Rand 3 der Trägerplatte 2 abgebildet.

Sinngemäß lautet die MIL-Entfernungsformel F3:

$$\text{Entfernung in Metern} = \frac{\text{bekannte Zielobjektgröße in Metern}}{\frac{\text{abgelesener MIL} - \text{Wert}}{Meter}} \times 100 \text{ m}$$

Präferiert wird für eine international einheitliche Ausgestaltung des Absehens 1 jedoch eine tatsächliche Formulierung für die MIL-Entfernungsformel F3, die lautet:

$$\text{Distance in Meter } = \frac{\text{Target's Known Size in Meters}}{\text{Milled Target Size/m}} \times 100 \text{ m}$$

Die MIL-Zielobjektgrößenformel F4 lautet sinngemäß:

$$\text{Zielobjektgröße in Metern } = \frac{\text{bekannte Entfernung in Metern (X, Y)} \times \text{abgelesener MIL} - \text{Wert}}{100 \text{ m}}$$

Präferiert wird für eine international einheitliche Ausgestaltung des Absehens 1 jedoch eine Formulierung der MIL-Zielobjektgrößenformel F4, die lautet:

$$\text{Target Size in Meter } = \frac{\text{Distance in Meter} \times \text{Milled Target Size}}{100 \text{ m}}$$

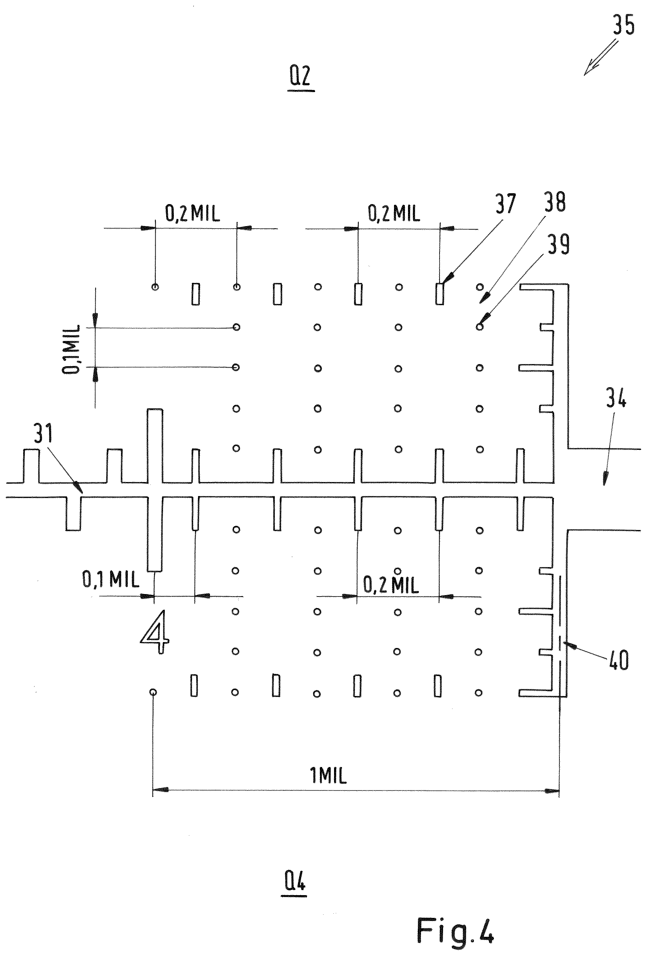

Am unteren Rand des Absehens 1 ist außerdem ein Skalierungsmaßstab zur Unterstützung des Schützens angegeben, der lautet:
Mil Reticle 0.1 Mil = 1 cm at 100 m
Daraus geht also hervor, dass ein MIL-Wert von 0,1 MIL bei einer Distanz von 100 m genau 1 cm Größe des Zielobjektes entspricht.
Für die Entfernungsberechnung ergäbe sich also bei dem dargestellten Zielobjekt ZO, einem Hirsch, von dem die Schulterhöhe X zwischen dem ersten und zweiten Bezugspunkt E1, E2 1,2 m bekannt ist, nicht jedoch die Rumpflänge Y zwischen dem dritten und vierten Bezugspunkt E3, E4, dass der vertikale MIL-Wert zwischen dem ersten und zweiten Bezugspunkt E1, E2 13,5 MIL beträgt. Daraus ergibt sich eine Distanz zum Zielobjekt ZO von 88,9 m.
Des Weiteren ist links und rechts beabstandet vom Zielpunkt auf der horizontalen Visierachse 31 jeweils ein Raster 35, 36, deren Details sich aus Fig. 4 und zugehöriger Beschreibung ergeben.
In dem Quadranten Q4, der rechts von der vertikalen Visierachse 32 und unterhalb der horizontalen Visierachse 31 angeordnet ist, sind entlang einer (imaginären) Geraden, die eine Diagonale mit Schnittpunkt mit dem Zielpunkt 33 ist, die Zoomfaktoren 20 abgebildet. Ein eingestellter Zoom eines Zielfernrohrs ist dann dadurch bestimmbar, dass der äußerste sichtbare Zoomfaktor 20 abgelesen wird.
**Fig. 2** zeigt einen Ausschnitt aus dem Zentrum des Absehens 1 gemäß Fig. 1. Gleiche Bezugszeichen betreffen daher die gleichen technischen Merkmale wie in Fig. 1, weswegen auf die zugehörige, vorstehende Beschreibung verwiesen wird.
Neben dem in Fig. 2 gekennzeichneten Zielpunkt 33 im Schnittpunkt der horizontalen und vertikalen Visierachse 31, 32 erkennt man, hier deutlich besser das Raster 36. Außerdem sieht man, wie die horizontale Visierachse 31 beabstandet von dem Zielpunkt 33 als Doppellinie 34 ausgeführt ist. Betrachtet man den äußeren Bereich der horizontalen Visierachse 31 in Fig. 1 sieht man, wie die zwei Linien 34 mit zunehmendem Abstand vom Zielpunkt 33 moderat konisch auseinanderlaufen. Die Doppellinie 34 startet gemäß Fig. 2 direkt hinter dem Raster 36 sowie bei dem MIL-Wert 5,0.
Weiterhin erkennt man, dass die horizontale und vertikale Visierachse 31, 32 im Bereich um den Zielpunkt 33 jeweils von einer Strichlinie ausgebildet ist. Die Strichlinie grenzt bei 0,5 MIL an eine durchgezogene Linie an. Die Längen der Linienabschnitte und der Linienunterbrechungen der Strichlinie bilden die MIL-Skala im Bereich um den Zielpunkt 33 aus. Hierzu sind die Linienunterbrechungen und die Linienabschnitte jeweils 0,1 MIL lang. Mit anderen Worten treten die Linienabschnitte und Linienunterbrechungen hier an die Stelle von den weiter außen genutzten MIL-Skalenstrichen, die senkrecht zur Strichlinie angeordnet sind.
Das Absehen 1 weist ein Leuchtmittel auf, mit dem die horizontale und vertikale Visierachse 31, 32 im Bereich um den Zielpunkt 33 bis 0,5 MIL beleuchtbar sind. Hierzu ist eine Struktur aus Chrom ausgebildet, die bei aktivierten Leuchtmitteln leuchtet und ohne aktivierte Leuchtmittel dadurch sichtbar bleibt, dass sie zumindest eine erhöhte Opazität aufweist. Die Strukturen aus Chrom haben eine Strichstärke von maximal 4 μm.
Die MIL-Skalenstriche auf der horizontalen und vertikalen Visierachse 31, 32 haben mit zunehmendem Abstand vom Zielpunkt 33 stufenweise eine größere Strichstärke, sind stufenweise länger ausgeführt und sind in größeren Abständen voneinander angeordnet.
Außerdem nimmt die Strichstärke der horizontalen Visierachse 31 und der vertikalen Visierachse 32 mit zunehmendem Abstand vom Zielpunkt 33 stufenweise zu.
Es sei darauf hingewiesen, dass in der Praxis üblicherweise alle Linien und Schriftzeichen des Absehens 1 volle Linien sind. Um die Konturen jedoch scharf darzustellen, sind die Linien und Schriftzeichen jedoch mit Umrisslinien dargestellt. Die Doppellinie 34 kann dabei auch als eine voll geschwärzte Linie ausgeführt sein.

Im Besonderen ändern sich die Strichstärke der Achse und der MIL-Skalenstriche im Bereich des oberen Abschnitts der vertikalen Visierachse 32 an zwei Stufengrenzen, nämlich von der Strichlinie im Bereich des Zielpunkts 33, zu einer durchgehenden Linie und hin zu einer dickeren Linie. Die Stufengrenzen liegen bei 0,5 MIL und 2,0 MIL, wobei der obere Abschnitt der vertikalen Visierachse 32 bei 3,0 MIL endet. Lediglich der Wert 2,0 MIL ist am zugehörigen Skalenstrich mit der Ziffer 2 gekennzeichnet.

Auf dem unteren Abschnitt der vertikalen Visierachse 32 ändern sich die Strichstärke der Achse und der MIL-Skalenstriche im Bereich an drei Stufengrenzen, nämlich von der Strichlinie im Bereich des Zielpunkts 33, zu einer durchgehenden Linie, hin zu einer dickeren Linie mit feiner MIL-Zwischenwerteinteilung und einer gleichbleibend dicken Linie mit gröberer MIL-Zwischenwerteinteilung. Die Stufengrenzen liegen bei 0,5 MIL, 2,0 MIL und 5,0 MIL, wobei der untere Abschnitt der vertikalen Visierachse 32 bei circa 39,0 MIL endet. Lediglich der Wert 2,0 MIL sowie dessen Vielfache sind bis 10,0 MIL am jeweils zugehörigen Skalenstrich mit Ziffern gekennzeichnet. Weiter außen sind nur noch die MIL-Werte 20 MIL und 30 MIL dargestellt. Auch die Schriftgröße nimmt ausgehend vom Zielpunkt nach außen zu.

Die horizontale Visierachse 31 ist links und rechts von der vertikalen Visierachse 32 spiegelsymmetrisch aufgebaut. Hier ändern sich die Strichstärke der Achse und der MIL-Skalenstriche an drei Stufengrenzen, nämlich von der Strichlinie im Bereich des Zielpunkts 33, zu einer durchgehenden Linie, hin zu einer dickeren Linie mit feiner MIL-Zwischenwerteinteilung, einer gleichbleibend dicken Linie mit dem Raster (35, siehe Fig. 1), 36 als MIL-Einteilung und hin zu der Doppellinie 34. Die Stufengrenzen liegen bei 0,5 MIL, 2,0 MIL, 4,0 MIL und 5,0 MIL.

In dem Bereich, in dem die Skaleneinteilung nicht-natürlichen MIL-Zwischenwerte darstellt (ausgenommen das Raster 35, 36) erstrecken sich die nicht-natürlichen geraden und ungeraden MIL-Zwischenwerte zwischen wenigstens zwei natürlichen MIL-Werten in entgegengesetzter Richtung von der Visierachse 31, 32 weg. Auf diese Weis lassen sich die in 0,1 MIL abgestuften MIL-Zwischenwerte gut ablesen.

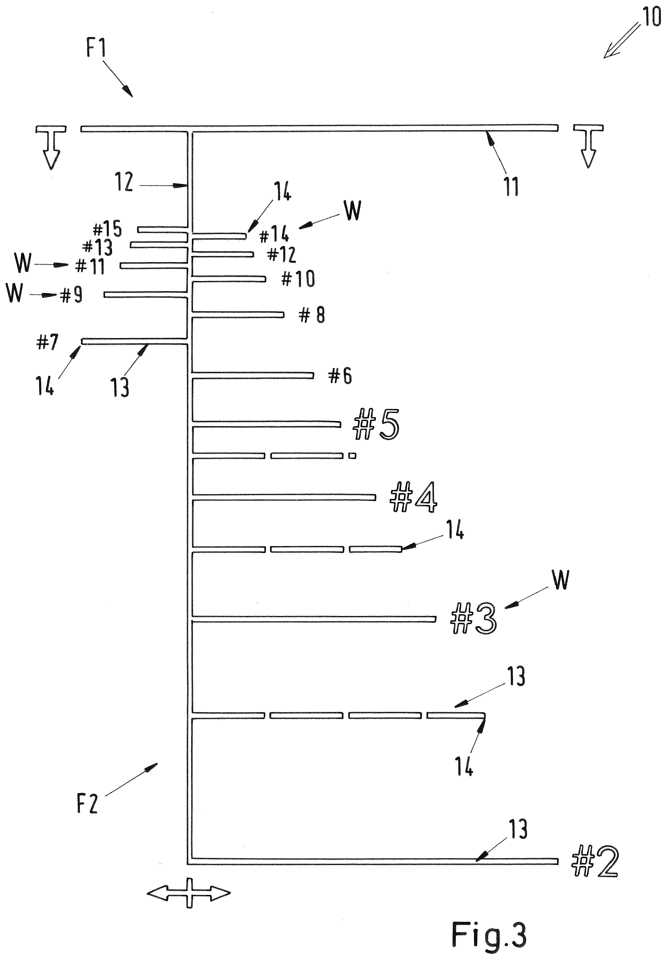

Die Größenwertskala 10 im linken unteren Quadranten Q3 ist isoliert noch einmal in Fig. 3 dargestellt. Die diesbezügliche Beschreibung zu Fig. 2 gilt daher analog auch für Fig. 3. Man erkennt in den **Fig. 2 und 3**, dass die Größenwertskala 10 eine erste Hauptlinie 11 aufweist, die eine erste Anlegelinie zum Anlegen an einem ersten Bezugspunkt E1 eines Zielobjekts ZO ausbildet. Parallel zur ersten Hauptlinie 11 sind Ableselinien 13 zum Anlegen an einem zweiten Bezugspunkt E2 des Zielobjekts ZO angeordnet. Den Ableselinien 13 ist jeweils ein Zahlenwert W zugeordnet. Erkennbar wird der Abstand zwischen zwei benachbart angeordneten Ableselinien 13, denen jeweils ein natürlicher Zahlenwert W zugeordnet ist, mit zunehmendem Abstand von der ersten Hauptlinie 11 größer. Es liegt also eine nichtlineare Skaleneinteilung vor.

Die Zahlenwerte W werden mit zunehmendem Abstand der zugehörigen Ableselinie 13 von der ersten Hauptlinie 11 kleiner. Des Weiteren sind die Zahlenwerte W mit einem Rautezeichen, insbesondere mit #, gekennzeichnet, das vor dem eigentlichen Zahlenwert W steht.

Der ersten Hauptlinie 11 ist eine erste Umrechnungsformel F1 zugeordnet, in welche der ermittelte Zahlenwert W, der am zweiten Bezugspunkt (siehe Bezugszeichen E2 in Fig. 1) des Zielobjekts ZO abgelesen wird, als Eingangsgröße einzusetzen ist. Auf Basis des folgenden Anwenderhinweises ergibt sich eine einfache, einheitsfrei durchzuführende Berechnung:

$$\text{Top Horizontal Line to \# Number Line} = 1.0\ (m)\ @\ \#\ x\ 100(m)$$

Aus diesem Anwenderhinweis ergibt sich, dass eine Zielobjektgröße von 1,0 m in Verbindung mit dem abgelesenen Zahlenwert W eine Distanz von dem Zahlenwert W multipliziert mit 100 m entspricht.

Hieraus lässt sich für den Schützen ableiten, dass die Umrechnungsformel F1 eine Entfernungsfunktion in Abhängigkeit vom Zahlenwert W ist, die sinngemäß lautet:

$$\text{Entfernung}\ (X, W) = \text{Zahlenwert W x Zielobjektgröße in Metern X x } 100\ m * m^{-1}$$

Mit der ersten Umrechnungsformel F1 lässt sich also eine Entfernung D des Absehens 1 zum Zielobjekt ZO dadurch berechnen, dass der ermittelte Zahlenwert W mit einer definierten ersten Distanz D1 von 100 m und einer vom Zielobjekt ZO bekannten Größe X zwischen dem ersten und zweiten Bezugspunkt (E1, E2) zu multiplizieren ist.

Für das beispielhaft in Fig. 2 eingefügte Zielobjekt ZO, wiederum ein Hirsch mit 1,2 m Schulterhöhe X, ergibt sich aus der Größenwertskala 10 ein Zahlenwert von #11. Damit beträgt die Schussdistanz 1320 m (= 11 x 1,2 x 100).

Zum Vergleich ergibt sich über die MIL-Skala ein MIL-Wer für X von 0,9 MIL. Das entspricht einer Schussdistanz von 1333 m, was hinreichend genau ist.

Der kleinste bestimmbare Zahlenwert W #2, der auf dem Abstand zwischen der ersten Hauptlinie 11 und der am weitest entfernt angeordneten Ableselinie 13 beruht, entspricht 5 MIL der MIL-Skala auf den Visierachsen 31, 32.

Weiterhin weist die Größenwertskala 10 eine zweite Hauptlinie 12 auf, die senkrecht zu der ersten Hauptlinie 11 ausgerichtet ist. Dabei ist die erste Hauptlinie 11 horizontal und die zweite Hauptlinie 12 vertikal ausgerichtet. Die zweite Hauptlinie 12 liegt nur auf einer Seite der ersten Hauptlinie 11, nämlich unterhalb von dieser, wobei die erste und zweite Hauptlinie 11, 12 eine T-Kreuzung ausbilden. Auf welcher Seite eines Zielobjektes ZO die Haltelinien anzulegen sind ist jeweils mit endseitigen Richtungspfeilen gekennzeichnet.

Die Ableselinien 13 sind entlang der zweiten Hauptlinie 12 angeordnet und haben definierte Längen. Die zweite Hauptlinie 12 bildet eine zweite Anlegelinie zum Anlegen an einem dritten Bezugspunkt (siehe Bezugszeichen E3 in Fig. 1) des Zielobjekts ZO aus. Zudem erstrecken sich die Ableselinien 13 von der zweiten Hauptlinie 12 weg und das jeweilige freie Ende der Ableselinien 13 bildet einen Ablesepunkt 14 zum Anlegen an einem vierten Bezugspunkt (siehe Bezugszeichen E4 in Fig. 1) des Zielobjekts ZO aus.

Die Zahlenwerte W werden mit zunehmendem Abstand des zugehörigen Ablesepunkts 14 von der zweiten Hauptlinie 12 kleiner. Vorliegend sind die Ablesepunkte 14 unmittelbar von einem freien Linienende der Ableselinie 13 ausgebildet. Das heißt, es sind an den Ableselinien 13 keine geometrischen Linienabschlüsse wie Punkte, Querstriche oder Pfeilspitzen vorgesehen.

Der Abstand zwischen der zweiten Hauptlinie 12 und dem Ablesepunkt 14 einer Ableselinie 13 wird mit zunehmendem Abstand der Ableselinie 13 von der ersten Hauptlinie 11 größer.

Durch diese Anordnung ist es möglich, dem Abstand zwischen der zweiten Hauptlinie 12 und dem jeweiligen Ablesepunkt 14 einer der Ableselinien 13 den gleichen Zahlenwert W zuzuordnen, wie dem Abstand zwischen der ersten Hauptlinie 11 und dieser Ableselinie 13. Die Zahlenwerte W sind an wenigstens zwei der Ableselinien 13 abgebildet, nämlich jeweils an dem freien Ende der Ableselinien 13. Es sind außerdem nur Zahlenwerte W abgebildet, welchen ein natürlicher Zahlenwert zugeordnet ist. Des Weiteren ist drei Ableselinien 13 kein natürlicher Zahlenwert zugeordnet. Diesen drei Ableselinien 13 ist stattdessen jeweils die Hälfte eines natürlichen Zahlenwertes zugeordnet. Grafisch unterstrichen wird diese Besonderheit dadurch, dass die Ableselinien 13, denen ein natürlicher Zahlenwert zugeordnet ist, mit einer durchgehenden Linie, und die Ableselinien 13, denen kein natürlicher Zahlenwert zugeordnet ist, mit einer unterbrochenen Linie dargestellt sind.

Die Ableselinien 13, welche näher an der ersten Hauptlinie 11 angeordnet sind, liegen sehr dicht beieinander, weswegen sie sich abwechselnd in entgegengesetzter Richtung von der zweiten Hauptlinie 12 weg erstrecken. Demgegenüber erstrecken sich die Ableselinien 13, welche weiter entfernt von der ersten Hauptlinie 11 angeordnet sind, in gleicher Richtung von der zweiten Hauptlinie 12 weg. Die Grenze liegt hier beim Zahlenwert W #7. Die ungeraden Zahlenwerte W sind ab hier nach links ausgelagert. Beim optischen Abgleich mit dem Zielobjekt wird der Schütze zunächst die rechten Ableselinien 13 heranziehen und wenn kein Wert passt zu den linken Ableselinien 13 herüberschwenken, um den rechts fehlenden Zwischenwert zu ermitteln. Bei diesem Wechsel von links nach rechts kehrt sich die Definition der Bezugspunkte E3 und E4 am Zielobjekt ZO um.

Man erkennt, dass alle Ablesepunkte 14 von den Ableselinien 13, die sich in die gleiche Richtung von der zweiten Hauptlinie 12 weg erstrecken, auf einer imaginären Geraden angeordnet sind. Die beiden imaginären Geraden bilden einen Kegel, dessen Mittelachse die zweite Hauptlinie 12 ist.

Der zweiten Hauptlinie 12 ist eine zweite Umrechnungsformel F2 zugeordnet, in welche der ermittelte Zahlenwert W, der am vierten Bezugspunkt E4 des Zielobjekts ZO abgelesen wird, als Eingangsgröße einzusetzen ist.

Die zweite Umrechnungsformel F2 ist in Form eines Ausführungsbeispiels an der zweiten Hauptlinie 12 abgebildet, das lautet:

$$\text{Vertical Line to End of \# Number Line} = 0.5 \text{ m @ \# x } 100\text{m}$$

Aus diesem Anwenderhinweis ergibt sich, dass eine Zielobjektgröße von 0,5 m in Verbindung mit dem abgelesenen Zahlenwert W einer Distanz von dem Zahlenwert W multipliziert mit 200 m entspricht.

Hieraus lässt sich für den Schützen ableiten, dass die zweite Umrechnungsformel F2 eine Entfernungsfunktion in Abhängigkeit vom Zahlenwert W ist, die sinngemäß lautet:

$$\text{Entfernung } (Y, W) = \text{Zahlenwert W x Zielobjektgröße in Metern Y x } 200 \text{ m} * \text{m}^{-1}$$

Mit der zweiten Umrechnungsformel F2 lässt sich also die Entfernung des Absehens 1 zum Zielobjekt ZO dadurch berechnen, dass der ermittelte Zahlenwert W mit einer definierten zweiten Distanz D2 von 200 m und einer vom Zielobjekt ZO bekannten Größe Y zwischen dem ersten und zweiten Bezugspunkt (E1, E2) zu multiplizieren ist.

Für das beispielhaft in Fig. 2 eingefügte Zielobjekt ZO, der Hirsch mit 1,3 m Rumpflänge Y, ergibt sich aus der Größenwertskala 10 ein Zahlenwert von #5. Damit beträgt die Schussdistanz 1300 m.

Zum Vergleich ergibt sich über die MIL-Skala ein MIL-Wer für Y von 0,95 MIL. Das entspricht einer Schussdistanz von 1368 m, was noch recht dicht am vorstehend über die Größenwertskala 10 ermittelten Wert liegt. Rundet der Schütze allerdings auf den verfügbaren MIL-Zwischenwert 0,9 MIL oder 1,0 MIL führt dies zu einer Spanne von 1300 m bis 1444 m.

Der kleinste bestimmbare Zahlenwert W #2, der auf dem Abstand zwischen der ersten Hauptlinie 11 und der am weitest entfernt angeordneten Ableselinie 13 beruht, entspricht 2,5 MIL der MIL-Skala auf der horizontalen Visierachse 31.

Vorliegend entspricht die definierte zweite Distanz D2 also nicht der definierten ersten Distanz D1, sondern ist ein Vielfaches hiervon.

Optional kann vorgesehen sein, dass Leuchtmittel vorgesehen sind, mit denen zumindest Teile der Größenwertskala 10 beleuchtbar sind.

Die Größenwertskala 10 ist nach den Fig. 1 und 2 vollständig in dem Quadranten Q3 der Visierhilfe 30 angeordnet, der links von der vertikalen Visierachse 32 und unterhalb der horizontalen Visierachse 31 angeordnet ist. Sie liegt außerdem vollständig in einem Bereich um den Zielpunkt 33 liegt, der sich vertikal von 0 MIL bis $\pm$10 MIL und horizontal von 0 MIL bis $\pm$10 MIL der MIL-Skala erstreckt.

Dabei ist die erste Hauptlinie 11 genau 2,0 MIL von der horizontalen Visierachse 31 entfernt angeordnet und endet genau 2,0 MIL von der vertikalen Visierachse 31 entfernt. Auch keine der Ableselinien 13 ragt näher als 2,0 MIL an die vertikale Visierachse 31 heran.

In **Fig. 4** ist das Raster 35 aus Figur 1 vergrößert dargestellt. Es liegt zwischen den MIL-Werten 4,0 MIL und 5,0 MIL. MIL-Skalenstriche, die innerhalb des Rasters 35 liegen, sind optisch dadurch verlängert, dass am äußeren Rand des Rasters 35 jeweils ein zusätzlicher Punkt 37 in der Verlängerungsachse des MIL-Skalenstrichs abgebildet ist. Er ist als sehr kurzer Strich ausgeführt.

Das Raster 35 ist genau 1 MIL breit und 1 MIL hoch. Dabei liegt es 0,5 MIL oberhalb und 0,5 MIL unterhalb der horizontalen Visierachse 31 und grenzt bei 5,0 MIL an die Doppellinie 34 der horizontalen Visierachse 31 an.

Innerhalb des Rasters 35 sind halbe Werte zwischen MIL-Skalenstrichen durch vertikal ausgerichtete unterbrochene Linien 38 abgebildet, insbesondere Punktlinien, die jeweils bis an den äußeren Rand des Rasters 35 führen. Die punktförmigen Linienabschnitte 39 und die Linienunterbrechungen der unterbrochenen Linien korrespondieren mit MIL-Werten, wodurch ein Punktraster ausgebildet ist. Jedem punktförmigen Linienabschnitt 39 (Punkt) ist ein horizontaler und ein vertikaler MIL-Wert zugeordnet. Um die vertikalen MIL-Werte zu verdeutlichen, ist an dem horizontal äußeren Ende des Rasters 35 eine vertikale MIL-Skala 40 abgebildet ist, die mit den Linienabschnitten und den Linienunterbrechungen der unterbrochenen Linien korrespondiert.

Die in Fig. 4 gezeigten Bemaßungen, welche mit der Einheit MIL gekennzeichnet sind, dienen lediglich der Erläuterung der Erfindung, sind jedoch nicht Bestandteil des Absehens 1.

Das Raster 36 nach den Fig. 1 und 2 ist spiegelbildlich zum Raster 35 auf der gegenüberliegenden Seite der vertikalen Visierachse 32 ausgebildet.

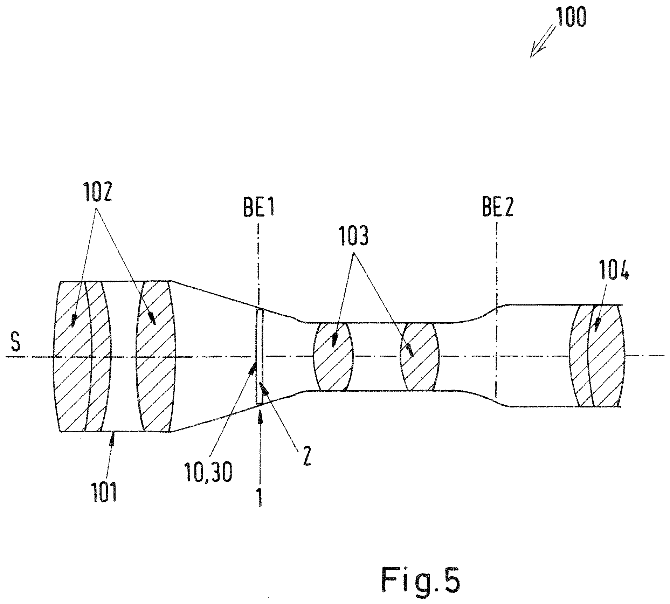

**Fig. 5** zeigt eine schematische Darstellung eines Längsschnitts durch ein Zielfernrohr 100 mit einem Absehen 1 mit den Merkmalen der Fig. 1, 2, 3 und 4. Das Zielfernrohr 100 weist ein tubusförmiges Gehäuse 101 auf, in dem entlang eines optischen Strahlengangs S auf Seiten des Zielobjekts ein Objektiv 102 angeordnet ist. Hinter dem Objektiv ergibt sich entlang des Strahlengangs eine erste Bildebene BE1. In dieser ist das Absehen 1 platziert. Insbesondere liegt die Seite der Trägerplatte 2, auf die die grafischen Darstellungen des Absehens 1 liegen, insbesondere die Visierhilfe 30, die Zoomfaktoren und die Größenwertskala 10 in der ersten Bildebene BE1. In Richtung des Zielobjekts existieren in dem Zielfernrohr 100 keine weiteren Bildebenen.

Entlang des Strahlengangs S hinter dem Absehen 1 ist eine Linsenanordnung 103 im Gehäuse 101 aufgenommen. Dieses kehrt das in der ersten Bildebene BE1 vorliegende Bild um und fokussiert es vergrößert in einer zweiten Bildebene BE2 hinter der Linsenanordnung 103. Es werden also das Absehen 1 und das Zielobjekt vergrößert. Das Zielfernrohr 100 weist insbesondere eine verstellbare optische Vergrößerung bzw. einen optischen Zoom auf. Hierzu ist die Linsenanordnung 103 als Umkehrsystem ausgebildet, das über zwei Linseneinheiten verfügt, die zwischen der ersten und zweiten Bildebene BE1, BE2 entlang des Strahlengangs S einzeln verschiebbar gelagert sind. Die einzelnen Verschiebungen der zwei Linseneinheiten sind derart kinematisch gekoppelt, dass eine Position einer der Linseneinheiten von der Position der anderen der Linseneinheiten abhängig ist.

Auf der dem Schützen zugewendeten Seite des Gehäuses 101 ist in diesem ein Okular 104 zur Betrachtung des Bildes in der zweiten Bildebene BE2 angeordnet.

Nicht dargestellt ist eine Halterung zum Anbringen in einer festgelegten, vorbestimmten Position relativ zu einem Lauf einer Schusswaffe.

Mit einer solchen Schusswaffe mit Zielfernrohr 100 ist schließlich ein Verfahren zum Treffen eines Zielobjekts ZO von bekannter oder schätzbarer Größe mit einem Projektil, das von der Schusswaffe abgefeuert wird, durchführbar, das folgenden Schritte umfasst:

- Lokalisieren des Zielobjekts ZO bekannter oder schätzbarer tatsächlicher Größe X, Y;
- Bestimmung der Entfernung zum Zielobjekt ZO durch Anlegen der Größenwertskala 10 an dem Zielobjekt ZO, insbesondere an Bezugspunkten E1, E2, E3, E4 des Zielobjekts ZO, Ablesen des Zahlenwerts W aus der Größenwertskala 10 und Umrechnung des Zahlenwerts W in die Entfernung;
- Justierung des Zielfernrohrs 100 basierend auf der bestimmten Entfernung;
- Ausrichtung des Zielpunkts 33 auf dem Zielobjekt ZO; und
- Austreiben des Projektils aus der Schusswaffe.

Die Justierung des Zielfernrohrs 100 kann insbesondere unter Berücksichtigung von Seitenwind und/oder vertikalen Luftströmungen sowie von relevanten Parametern der eingesetzten Schusswaffe und/oder der eingesetzten Munition erfolgen, die alle maßgeblichen Einfluss auf die Flugbahn des Projektils haben können.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Bezugszeichenliste

| | | | |
|---|---|---|---|
| 1 | Absehen | BE1 | erste Bildebene |
| 2 | Trägerplatte | BE2 | zweite Bildebene |
| 3 | Rand | D | Entfernung |
| 10 | Größenwertskala | D1 | definierte erste Distanz |
| 11 | erste Hauptlinie | D2 | definierte zweite Distanz |
| 12 | zweite Hauptlinie | | |
| 13 | Ableselinie | E1 | erster Bezugspunkt (Zielobjekt) |
| 14 | Ablesepunkt | E2 | zweiter Bezugspunkt (Zielobjekt) |
| | | E3 | dritter Bezugspunkt (Zielobjekt) |
| 20 | Zoomfaktor | E4 | vierter Bezugspunkt (Zielobjekt) |
| 30 | Visierhilfe | F1 | erste Umrechnungsformel |
| 31 | horizontale Visierachse | F2 | zweite Umrechnungsformel |
| 32 | vertikale Visierachse | F3 | MIL-Entfernungsformel |
| 33 | Zielpunkt | F4 | MIL-Zielobjektgrößenformel |
| 34 | Doppellinie | | |
| 35 | Raster | Q1 | erster Quadrant |
| 36 | zweites Raster | Q2 | zweiter Quadrant |
| 37 | Strichverlängerung | Q3 | dritter Quadrant |
| 38 | unterbrochene Linie | Q4 | vierter Quadrant |
| 39 | Linienabschnitt | S | optischer Strahlengang |
| 100 | Zielfernrohr | | |
| 101 | Gehäuse | W | Zahlenwert |
| 102 | Objektiv | X | Größe (Zielobjekt) |
| 103 | Linsenanordnung | Y | Größe (Zielobjekt) |
| 104 | Okular | ZO | Zielobjekt |

## Patentansprüche

1. Absehen (1) für ein Zielfernrohr (100), mit einer transparenten Trägerplatte (2), auf der eine Größenwertskala (10) abgebildet ist, wobei die Größenwertskala (10) eine erste Hauptlinie (11) aufweist, die eine erste Anlegelinie zum Anlegen an einem ersten Bezugspunkt (E1) eines Zielobjekts (ZO) ausbildet, wobei parallel zur ersten Hauptlinie (11) Ableselinien (13) zum Anlegen an einem zweiten Bezugspunkt (E2) des Zielobjekts (ZO) angeordnet sind, wobei den Ableselinien (13) jeweils ein Zahlenwert (W) zugeordnet ist, wobei der Abstand zwischen zwei benachbart angeordneten Ableselinien (13), denen jeweils ein natürlicher Zahlenwert (W) zugeordnet ist, mit zunehmendem Abstand von der ersten Hauptlinie (11) größer wird, **dadurch gekennzeichnet, dass** die Größenwertskala (10) eine zweite Hauptlinie (12) aufweist, die senkrecht zu der ersten Hauptlinie (11) ausgerichtet ist, wobei die Ableselinien (13) entlang der zweiten Hauptlinie (12) angeordnet sind, wobei die zweite Hauptlinie (12) eine zweite Anlegelinie zum Anlegen an einem dritten Bezugspunkt (E3) des Zielobjekts (ZO) ausbildet, und wobei sich die Ableselinien (13) von der zweiten Hauptlinie (12) weg erstrecken und das jeweilige freie Ende der Ableselinien (13) einen Ablesepunkt (14) zum Anlegen an einem vierten Bezugspunkt (E4) des Zielobjekts (ZO) ausbildet , wobei der Abstand zwischen der zweiten Hauptlinie (12) und dem Ablesepunkt (14) einer Ableselinie (13) mit zunehmendem Abstand der Ableselinie (13) von der ersten Hauptlinie (11) größer wird.

**2.** Absehen (1) nach Anspruch 1, **dadurch gekennzeichnet, dass** alle Ablesepunkte (14) von den Ableselinien (13), die sich in die gleiche Richtung von der zweiten Hauptlinie (12) weg erstrecken, auf einer Geraden angeordnet sind.

**3.** Absehen (1) nach einem der Ansprüche 1 oder 2, **dadurch gekennzeichnet, dass** sich zumindest in einem Fall die mittlere Ableselinie (13) von drei benachbarten Ableselinien (13) in entgegengesetzter Richtung von der zweiten Hauptlinie (12) weg erstreckt als die beiden äußeren der drei benachbarten Ableselinien (13).

**4.** Absehen (1) nach einem der Ansprüche 1 bis 3, **dadurch gekennzeichnet, dass** sich die Ableselinien (13), welche näher an der ersten Hauptlinie (11) angeordnet sind, abwechselnd in entgegengesetzter Richtung von der zweiten Hauptlinie (12) weg erstrecken.

**5.** Absehen (1) nach einem der Ansprüche 1 bis 4, **dadurch gekennzeichnet, dass** sich die Ableselinien (13), welche weiter entfernt von der ersten Hauptlinie (11) angeordnet sind, in gleicher Richtung von der zweiten Hauptlinie (12) weg erstrecken.

**6.** Absehen (1) nach einem der Ansprüche 1 bis 5, **dadurch gekennzeichnet, dass** dem Abstand zwischen der zweiten Hauptlinie (12) und dem jeweiligen Ablesepunkt (14) einer der Ableselinien (13) der gleiche Zahlenwert (W) zugeordnet ist, wie dem Abstand zwischen der ersten Hauptlinie (11) und dieser Ableselinie (13).

**7.** Absehen (1) nach einem der Ansprüche 1 bis 6, **dadurch gekennzeichnet, dass** diese eine transparente Trägerplatte (2) aufweist, auf der eine Visierhilfe (30) abgebildet ist, wobei die Visierhilfe (30) eine horizontale Visierachse (31) und eine vertikale Visierachse (32) aufweist, welche in ihrem Schnittpunkt einen Zielpunkt (33) definieren und die transparente Trägerplatte (2) in vier Quadranten (Q1, Q2, Q3, Q4) unterteilen, wobei die Größenwertskala (10) in einem der vier Quadranten (Q1, Q2, Q3, Q4) der Visierhilfe (30) angeordnet ist.

**8.** Absehen (1) nach Anspruch 7, **dadurch gekennzeichnet, dass** die Strichstärke der horizontalen Visierachse (31) und/oder der vertikalen Visierachse (32) mit zunehmendem Abstand vom Zielpunkt (33) stufenweise zunimmt.

**9.** Absehen (1) nach einem der Ansprüche 7 oder 8, **dadurch gekennzeichnet, dass** die horizontale Visierachse (31) beabstandet von dem Zielpunkt (33) als Doppellinie (34) ausgeführt ist.

**10.** Absehen (1) nach Anspruch 9, **dadurch gekennzeichnet, dass** die zwei Linien der Doppellinie (34) mit zunehmendem Abstand vom Zielpunkt (33) konisch auseinanderlaufen.

**11.** Absehen (1) nach einem der Ansprüche 7 bis 10, **dadurch gekennzeichnet, dass** beabstandet vom Zielpunkt (33) auf der horizontalen Visierachse (31) ein Raster (35) ausgebildet ist, wobei MIL-Skalenstriche, die innerhalb des Rasters (35) liegen, optisch dadurch verlängert sind, dass am äußeren Rand des Rasters (35) jeweils ein Punkt (37) in der Verlängerungsachse des MIL-Skalenstrichs abgebildet ist.

**12.** Zielfernrohr (100) mit einem Gehäuse (101), in dem entlang eines optischen Strahlengangs (S) ein Objektiv (102) und ein Absehen (1) nach einem der Ansprüche 1 bis 11 angeordnet sind.

**13.** Verfahren zum Treffen eines Zielobjekts (ZO) von bekannter oder schätzbarer Größe mit einem Projektil, das von einer Schusswaffe mit einem Zielfernrohr (100) nach Anspruch 12 abgefeuert wird, umfassend die folgenden Schritte:

- Lokalisieren des Zielobjekts (ZO) bekannter oder schätzbarer tatsächlicher Größe (X, Y);
- Bestimmung der Entfernung zum Zielobjekt (ZO) durch Anlegen der Größenwertskala (10) an dem Zielobjekt (ZO), Ablesen des Zahlenwerts (W) aus der Größenwertskala (10) und Umrechnung des Zahlenwerts (W) in die Entfernung;
- Justierung des Zielfernrohrs (100) basierend auf der bestimmten Entfernung;
- Ausrichtung des Zielpunkts (33) auf dem Zielobjekt (ZO);

**EP 3 392 598 B1**

- Austreiben des Projektils aus der Schusswaffe.

**Claims**

1. Reticle (1) for a telescopic sight (100), having a transparent carrier plate (2) on which a size value scale (10) is depicted, wherein the size value scale (10) has a first principal line (11), which forms a first positioning line for positioning at a first reference point (E1) of a target object (ZO), read lines (13) for positioning at a second reference point (E2) of the target object (ZO) being arranged parallel to the first principal line (11), the read lines (13) being assigned in each case one numerical value (W), wherein the distance between two adjacently arranged read lines (13) which are each assigned a natural numerical value (W) increases with increasing distance from the first principal line (11), **characterised in that** the size value scale (10) has a second principal line (12) which is oriented perpendicular to the first principal line (11), wherein the read lines (13) are arranged along the second principal line (12), the second principal line (12) forming a second positioning line for positioning at a third reference point (E3) of the target object (ZO), and the read lines (13) extending away from the second principal line (12), and the respective free end of the read lines (13) forming a read point (14) for positioning at a fourth reference point (E4) of the target object (ZO), wherein the distance between the second principal line (12) and the read point (14) of a read line (13) increases with increasing distance of the read line (13) from the first principal line (11).

2. Reticle (1) according to claim 1, **characterised in that** all read points (14) of the read lines (13) which extend away from the second principal line (12) in the same direction are arranged on a straight line.

3. Reticle (1) according to any of claims 1 or 2, **characterised in that** at least in one case, the middle read line (13) of three adjacent read lines (13) extends away from the second principal line (12) in the opposite direction to the two outer read lines of the three adjacent read lines (13).

4. Reticle (1) according to any of claims 1 to 3, **characterised in that** those read lines (13) which are arranged closer to the first principal line (11) extend away from the second principal line (12) alternately in opposite directions.

5. Reticle (1) according to any of claims 1 to 4, **characterised in that** the read lines (13) which are arranged further away from the first principal line (11) extend away from the second principal line (12) in the same direction.

6. Reticle (1) according to any of claims 1 to 5, **characterised in that** the distance between the second principal line (12) and the respective read point (14) of one of the read lines (13) is assigned the same numerical value (W) as the distance between the first principal line (11) and said read line (13).

7. Reticle (1) according to any of claims 1 to 6, **characterised in that** said reticle has a transparent carrier plate (2) on which a sighting aid (30) is depicted, the sighting aid (30) having a horizontal sighting axis (31) and a vertical sighting axis (32) which, at their intersection point, define a target point (33) and which divide the transparent carrier plate (2) into four quadrants (Q1, Q2, Q3, Q4), wherein the size value scale (10) is arranged in one of the four quadrants (Q1, Q2, Q3, Q4) of the sighting aid (30).

8. Reticle (1) according to claim 7, **characterised in that** the mark thickness of the horizontal sighting axis (31) and/or of the vertical sighting axis (32) increases in stepwise fashion with increasing distance from the target point (33).

9. Reticle (1) according to any of claims 7 or 8, **characterised in that** the horizontal sighting axis (31) is, at a distance from the target point (33), formed as a double line (34).

10. Reticle (1) according to claim 9, **characterised in that** the two lines of the double line (34) conically diverge with increasing distance from the target point (33).

11. Reticle (1) according to any of claims 7 to 10, **characterised in that** a raster (35) is formed at a distance from the target point (33) on the horizontal sighting axis (31), wherein MIL scale marks situated within the raster (35) are visually lengthened **in that** in each case one point (37) is depicted, in the axis of elongation of the MIL scale mark, at the outer edge of the raster (35).

12. Telescopic sight (100) having a housing (101) in which an objective (102) and a reticle (1) according to any of claims 1 to 11 are arranged along an optical beam path (S).

15

**13.** Method for striking a target object (ZO) of known or estimable size with a projectile fired from a firearm having a telescopic sight (100) according to claim 12, comprising the following steps:

- localising the target object (ZO) of known or estimable actual size (X, Y);
- determining the distance to the target object (ZO) by positioning the size value scale (10) on the target object (ZO), reading the numerical value (W) from the size value scale (10) and converting the numerical value (W) into the distance;
- adjusting the telescopic sight (100) on the basis of the determined distance;
- aligning the target point (33) on the target object (ZO);
- expelling the projectile from the firearm.

**Revendications**

**1.** Réticule (1) pour une lunette de visée (100), avec une plaque de support transparente (2) sur laquelle une échelle de valeur de grandeur (10) est représentée, dans lequel l'échelle de valeur de grandeur (10) présente une première ligne principale (11) qui réalise une première ligne de pose pour la pose contre un premier point de référence (E1) d'un objet cible (ZO), dans lequel parallèlement à la première ligne principale (11) des lignes de lecture (13) sont agencées pour la pose contre un deuxième point de référence (E2) de l'objet cible (ZO), dans lequel respectivement une valeur numérique (W) est associée aux lignes de lecture (13), dans lequel la distance entre deux lignes de lecture (13) agencées de manière contiguë, auxquelles est associée respectivement une valeur numérique naturelle (W), est plus grande avec l'augmentation de la distance de la première ligne principale (11), **caractérisé en ce que** l'échelle de valeur de grandeur (10) présente une seconde ligne principale (12) qui est orientée perpendiculairement à la première ligne principale (11), dans lequel les lignes de lecture (13) sont agencées le long de la seconde ligne principale (12), dans lequel la seconde ligne principale (12) réalise une seconde ligne de pose pour la pose contre un troisième point de référence (E3) de l'objet cible (ZO), et dans lequel les lignes de lecture (13) s'étendent depuis la seconde ligne principale (12) et l'extrémité libre respective des lignes de lecture (13) réalise un point de lecture (14) pour la pose contre un quatrième point de référence (E4) de l'objet cible (ZO), dans lequel la distance entre la seconde ligne principale (12) et le point de lecture (14) d'une ligne de lecture (13) est plus grande avec l'augmentation de la distance de la ligne de lecture (13) de la première ligne principale (11).

**2.** Réticule (1) selon la revendication 1, **caractérisé en ce que** tous les points de lecture (14) des lignes de lecture (13) qui s'étendent dans la même direction depuis la seconde ligne principale (12), sont agencés sur une droite.

**3.** Réticule (1) selon l'une quelconque des revendications 1 ou 2, **caractérisé en ce qu'**au moins dans un cas la ligne de lecture médiane (13) des trois lignes de lecture contiguës (13) s'étend dans la direction opposée depuis la seconde ligne principale (12) aux deux extérieures des trois lignes de lecture contiguës (13).

**4.** Réticule (1) selon l'une quelconque des revendications 1 à 3, **caractérisé en ce que** les lignes de lecture (13) qui sont agencées plus près de la première ligne principale (11), s'étendent en alternance dans le sens opposé depuis la seconde ligne principale (12).

**5.** Réticule (1) selon l'une quelconque des revendications 1 à 4, **caractérisé en ce que** les lignes de lecture (13) qui sont agencées plus loin de la première ligne principale (11) s'étendent dans la même direction depuis la seconde ligne principale (12).

**6.** Réticule (1) selon l'une quelconque des revendications 1 à 5, **caractérisé en ce que** la même valeur numérique (W) est associée à la distance entre la seconde ligne principale (12) et le point de lecture respectif (14) d'une des lignes de lecture (13) comme la distance entre la ligne principale (11) et cette ligne de lecture (13).

**7.** Réticule (1) selon l'une quelconque des revendications 1 à 6, **caractérisé en ce que** celui-ci présente une plaque de support transparente (2) sur laquelle est représentée une aide à la vision (30), dans lequel l'aide à la vision (30) présente un axe de vision horizontal (31) et un axe de vision vertical (32) qui définissent dans leur point d'intersection un point cible (33) et divisent la plaque de support transparente (2) en quatre quadrants (Q1, Q2, Q3, Q4), dans lequel l'échelle de valeur de grandeur (10) est agencée dans un des quatre quadrants (Q1, Q2, Q3, Q4) de l'aide de vision (30).

**8.** Réticule (1) selon la revendication 7, **caractérisé en ce que** l'épaisseur de trait de l'axe de vision horizontal (31) et/ou de l'axe de vision vertical (32) augmente progressivement avec l'augmentation de la distance du point cible (33).

9. Réticule (1) selon l'une quelconque des revendications 7 ou 8, **caractérisé en ce que** l'axe de vision horizontal (31) est réalisé à distance du point cible (33) comme ligne double (34).

10. Réticule (1) selon la revendication 9, **caractérisé en ce que** les deux lignes de la ligne double (34) s'écartent l'une de l'autre en cône avec l'augmentation de la distance du point cible (33).

11. Réticule (1) selon l'une quelconque des revendications 7 à 10, **caractérisé en ce qu'**une trame (35) est réalisée à distance du point cible (33) sur l'axe de vision horizontal (31), dans lequel des traits d'échelle MIL qui se trouvent à l'intérieur de la trame (35), sont prolongés optiquement **en ce que** respectivement un point (37) dans l'axe de prolongement du trait d'échelle MIL est représenté au niveau du bord extérieur de la trame (35).

12. Lunette de visée (100) avec un boîtier (101) dans lequel un objectif (102) et un réticule (1) selon l'une quelconque des revendications 1 à 11 sont agencés le long d'un trajet de rayonnement optique (S).

13. Procédé de frappe d'un objet cible (ZO) de grandeur connue ou estimable avec un projectile qui est tiré par une arme à feu avec une lunette de visée (100) selon la revendication 12, comprenant les étapes suivantes :

- la localisation de l'objet cible (ZO) de grandeur réelle connue ou estimable (X, Y) ;
- la détermination de la distance de l'objet cible (ZO) par pose de l'échelle de valeur de grandeur (10) contre l'objet cible (ZO), la lecture de la valeur numérique (W) à partir de l'échelle de valeur de grandeur (10) et la conversion de la valeur numérique (W) en la distance ;
- l'ajustement de la lunette de visée (100) sur la base de la distance déterminée ;
- l'orientation du point cible (33) sur l'objet cible (ZO) ;
- l'expulsion du projectile hors de l'arme à feu.

EP 3 392 598 B1

Fig.1

18

EP 3 392 598 B1

Q1

Q2

30

2

36
34
6
31
4
2
33
2

F1

Q3
Q4
2

11
12
#15
#13
#11
#9
#7
W
14
13
10
F2
#14
#12
#10
#8
W
#6
#5
#4    14
#3
13
13
#2
14    W
Y
X

2

4

32

6

Fig.2

19

Fig.3

35

Q2

0,2 MIL          0,2 MIL          37    38

39

0,1 MIL

31

34

0,1 MIL          0,2 MIL

4

40

1MIL

Q4

Fig.4

21

EP 3 392 598 B1

100

102          BE1                    BE2
                    103
                                              104
S
                                    2
101   10,30
        1

Fig.5

22

**IN DER BESCHREIBUNG AUFGEFÜHRTE DOKUMENTE**

**In der Beschreibung aufgeführte Patentdokumente**

- DE 102014102966 A1